# EUROPEAN PATENT SPECIFICATION

(11) **EP 3 049 500 B1**
(45) Date of publication and mention of the grant of the patent: **12.06.2019**
(21) Application number: 14781377.8
(22) Date of filing: 23.09.2014
(51) Int. Cl.: C09K 8/04, C09K 8/524, E21B 37/06

(54) **DRILLING FLUID COMPOSITION AND METHOD USEFUL FOR REDUCING ACCRETION OF BITUMIN ON DRILL COMPONENTS**
BOHRFLÜSSIGKEITSZUSAMMENSETZUNG UND VERFAHREN ZUR REDUZIERUNG DES ANSETZENS VON BITUMEN AN BOHRERKOMPONENTEN
COMPOSITION DE FLUIDE DE FORAGE ET PROCÉDÉ UTILE POUR RÉDUIRE L'ACCRÉTION DE BITUME SUR LES COMPOSANTS DE FORAGE

(30) Priority: 26.09.2013 US 201361882666 P
(43) Date of publication of application: 03.08.2016
(73) Proprietor: Dow Global Technologies LLC, Midland, MI 48674 (US)
(72) Inventor: YU, Wanglin, Pearland, TX 77584 (US); SINGH, Harpreet, Pearland, TX 77584 (US)
(74) Representative: Murgitroyd & Company
(86) International application number: PCT/US2014/056940
(87) International publication number: WO 2015/047998

(56) References cited:
- WO-A1-2009/100298
- CA-A1- 2 745 017
- JP-A- 2006 070 215
- US-A- 5 705 476
- US-A1- 2011 281 777
- US-B1- 6 196 320

## Description

### FIELD OF THE INVENTION

The present invention relates to fluids used for drilling and completing oil wells and in particular those useful for deterring accretion of tar/bitumen on metal surfaces.

### BACKGROUND OF THE INVENTION

The process of drilling a hole in the ground for the extraction of a natural resource requires a fluid for removing cuttings from the wellbore, controlling formation pressures and maintaining hole stability. Drilling through oil sand formations causes problematic accretion of tar on drilling apparatus. Bitumen accretion on metal surfaces impairs drilling operations by blinding shale shaker screens, plugging centrifuges and drill bits, torque and drag increase and stuck pipe or casing. Standard drilling practices through oil sand formations, which are generally unconsolidated, can also lead to hole instability problems.

Additives, such as solvents, surfactants and viscosifiers, have been used in drilling fluids for drilling through bitumen containing formations. In addition, or alternately, drilling fluids have been chilled to deter accretion and enhance hole stability. However, these prior art additives and/or processes for reducing bitumen accretion suffer from one or more disadvantage or inefficiency. An effective additive for cleaning and inhibiting the accretion of bitumen and other fluids or solids in and on drilling equipment is desirable, in particular one demonstrating good biodegradability and low aquatic toxicity.

US 5,705,476 relates to wetting agents for aqueous liquors used in textile processes and crop protection agents. The wetting agents comprise propoxylated/ethoxylated alcohol and propoxylated alcohol. US2011/0281777 A1 describes drilling fluid compositions including a non-ionic surfactant. The non-ionic surfactant may be capped or branched alcohol ethoxylate.

### SUMMARY OF THE INVENTION

The present invention relates to such an anti-accretion additive. In one embodiment, the present invention is an aqueous-based drilling fluid comprising an anti-accretion additive and optionally a viscosifier, the anti-accretion additive comprising:
i from 5 to 30 parts by weight of a propoxylated alcohol of the formula:

   RO-(PO)ₓ

   wherein
   R is a linear or branched alkyl having from 8 to 16 carbons, preferably 8 to 10 carbons, more preferably independently 2-ethylhexyl or 2-propylheptyl, and
   x is from 1 to 10, preferably 3 to 7, more preferably 5
      and
ii from 95 to 70 parts by weight of a propoxylated and ethoxylated alcohol of the formula:

   R¹O-(PO)_{y}-(EO)_{z},

   wherein
   R¹ is a linear or branched alkyl having from 8 to 16 carbons, preferably 8 to 10 carbons, more preferably independently 2-ethylhexyl or 2-propylheptyl,
   y is from 2 to 10, preferably 3 to 7, and more preferably 5 and
   z is from 3 to 20, preferably 5 to 10
wherein parts by weight is based on the combined weight of the propoxylated alcohol i and a propoxylated and ethoxylated alcohol ii and EO and PO denote ethylene oxide and propylene oxide units, respectively.

The aqueous-based drilling fluid preferably comprises one or more of a viscosifier, fluid loss additive, a lubricant, a foam control agent, a weighting material, a salt, or a surfactant.

Another embodiment of the present invention is a method for drilling a wellbore through a formation comprising the steps of:
a operating a drilling assembly to drill a wellbore;
   and
b circulating an aqueous-based drilling fluid through the wellbore as it is drilled, the aqueous-based drilling fluid comprising the anti-accretion additive disclosed herein above.

Another embodiment of the present invention is a method for limiting accretion on, or removing accretion from, metal surfaces in contact with tar-sand containing formation, the method comprising the step of washing the metal surfaces with an aqueous-based drilling fluid comprising an anti-accretion additive disclosed herein above.

Also described, but not claimed, is a mixture for use as an anti-accretion additive, the mixture comprising the components of the anti-accretion additive as disclosed herein above.

### A BRIEF DESCRIPTION OF THE DRAWINGS

**FIGS. 1** to **4** are photographs showing the results of tests for bitumen accretion on metal surfaces.
**FIG. 5** is a photograph showing the results of wash-out from tar sands by different anti-accretion additives.

### DETAILED DESCRIPTION OF THE INVENTION

An anti-accretion additive, an aqueous-based drilling fluid, and a method for drilling a wellbore has been invented for use in formations bearing heavy oil, also called bitumen or tar. The accretion additive, drilling fluid, and method are useful to limit and possibly remove tar accretion on metal surfaces and/or to maintain borehole stability, may comprise standard viscosifiers and other chemicals used in drilling fluids. The drilling fluid and method may therefore be environmentally responsible and economically viable. We have found that a mixture comprising a propoxylated alcohol and a propoxylated and ethoxylated alcohol is a surprisingly effective anti-accretion additive. Propoxylated alcohols and propoxylated and ethoxylated alcohols are known, for example see US 5,705,476. Suitable propoxylated alcohols useful in the anti-accretion additive of the present invention have the formula:

RO-(PO)ₓ-H I

wherein R is preferably a linear or branched alkyl having from 8 to 16 carbons, preferably 8 to 10 carbons, and more preferably 2-ethylhexyl or 2-propylheptyl;
x is an integer from 1 to 10, preferably 3 to 7, and more preferably 5;
   and
PO denotes a propylene oxide unit.

Suitable propoxylated and ethoxylated alcohols useful in the anti-accretion additive of the present invention have the formula:

R¹O-(PO)_{y}-(EO)_{z}-H, II

wherein R¹ is a linear or branched alkyl having from 8 to 16 carbons, preferably 8 to 10 carbons, and more preferably 2-thylhexyl or 2-propylheptyl;
y is from 2 to 10, preferably 3 to 7, and more preferably 5;
z is from 3 to 20, preferably 5 to 10;
   and
EO and PO denote ethylene oxide and propylene oxide units, respectively.

The propoxylated alcohol I is present in an amount of from 5 to 30 parts by weight and the propoxylated and ethoxylated alcohol II is present in an amount of from 95 to 70 parts by weight, parts by weight are based on the combined weight of the propoxylated alcohol I and a propoxylated and ethoxylated alcohol II. More preferably the propoxylated alcohol I is present in an amont of from 10 to 30 parts by weight and the propoxylated and ethoxylated alcohol II is present in an amount of from 90 to 70 parts by weight, parts by weight are based on the combined weight of the propoxylated alcohol I and a propoxylated and ethoxylated alcohol II.

One embodiment of the present invention is an aqueous-based drilling fluid comprising the anti-accretion additives described herein above. In a preferred embodiment, the aqueous liquid is water, typically fresh water, but alternatively brine water or formation water (i.e., water naturally occurring in a formation through which a well is being drilled).

Preferably, the anti-accretion additive is present in the aqueous-based drilling fluid in an amount of equal to or greater than 0.01 weight percent, and more preferably in an amount of equal to or greater than 0.1 weight percent, weight percent based on the total weight of the aqueous drilling fluid. Preferably, the anti-accretion additive is present in the aqueous-based drilling fluid in an amount of equal to or less than 10 weight percent, and more preferably in an amount of equal to less than 1 weight percent, weight percent based on the total weight of the aqueous drilling fluid.

Another embodiment of the present invention is an aqueous-based drilling fluid comprising the anti-accretion additives described herein above and a viscosifier. Viscosifiers provide carrying capacity to an aqueous-based drilling fluid. Viscosifiers, for example, increase the viscosity of drilling fluid so that it can carry cuttings along with the flow of drilling fluid and to suspend cuttings and weight materials during periods of noncirculation. Viscosifiers may also act to reduce fluid loss by inhibiting fluid infiltration to the formation. Viscosifiers may prevent deposition or re-deposition of the bitumen on metal surfaces by suspending the tar and tar sand particles in the fluid. Some common viscosifiers useful in embodiments of the present drilling fluid may include, for example, any of: clay, xanthan gum, wellan gum, schleroglucan, guar gum, natural organic polymers, synthetic polymers, HEC (hydroxyethylcellulose), PAC (polyanionic cellulose), polyacrylates, ethylene oxide polymers, or mixtures thereof.

In one embodiment of the present invention, an aqueous-based drilling fluid may comprise a viscoifier in an amount of from 0.1 to 10 percent by weight based on the total weight of the aqueous-based drilling fluid.

The aqueous-based drilling fluid of the present invention may also comprise one or more additional drilling fluid additives used in such compositins, for example one or more of a fluid loss additive, a lubricant, a foam control agent, a weighting material, a salt, or a surfactant. These additional additives may be added to the drilling fluid when the fluid is prepared, directly into the tanks and may alternately or in addition by added by application first to metal surfaces such as shale shakers, etc. at surface to thereby enter the drilling fluid stream.

An aqueous-based drilling fluid according to the present invention may also include, if desired, a lubricant. The lubricant may act to soften the tar and provide a lubricating action to assist drilling and running liners into long horizontal sections of a wellbore. The lubricant may be non-ionic. High flash point vegetable oils, such as those having a flash point greater than 148°C, may be of some use in the present drilling fluids. Useful lubricants may include, for example, fatty acid methyl esters for example with an HLB (hydrophile-lipophile balance) of about 6, such as are commonly available as soybean oil, for example, commercially available as SoyClear™ products by AG Environmental Products, LLC or Oleocal™ products by Lambent Technologies Corp., or canola oil, diesel oil, long chain alcohols, mineral oils, and mixtures thereof.

In one embodiment of the present invention, an aqueous-based drilling fluid may comprise a lubricant in an amount of from 0.5-15 percent by weight lubricant based on the total weight of the aqueous-based drilling fluid.

Fluid loss additives may also be used in an aqueous-based drilling fluid in order to help prevent the drilling fluid from invading into porous subterranean formations under the actin of temperature and pressure. Some common fluid loss additives include, for example, starches, PAC, CMC (modified carboxy methyl cellulose), or mixtures of these compounds. Some of these chemicals may also have a viscosifying function.

In one embodiment of the present invention, an aqueous-based drilling fluid may comprise a fluid loss additive in an amount of from 0.1 to 10 percent by weight based on the total weight of the aqueous-based drilling fluid.

The drilling fluid may contain various foam control agents such as alcohol-based and silicone-based defoamers of the types known in the field of the invention.

In one embodiment of the present invention, an aqueous-based drilling fluid may comprise a foam control agent in an amount of from 0.01 to 5 percent by weight based on the total weight of the aqueous-based drilling fluid.

The drilling fluid may contain various weighting material in order to increase the density of the drilling fluid. Generally, weighting materials are inert, high density particulate solid materials. Examples of weighting materials include, but not limited to, barite, hematite, iron oxide, magnesium carbonate, calcium carbonate, or combinations of these compounds.

In one embodiment of the present invention, an aqueous-based drilling fluid may comprise a weighting material in an amount of from 0.5 to 20 percent by weight based on the total weight of the aqueous-based drilling fluid.

The drilling fluid may contain various bridging agents in order to seal off the pores of subterranean formations that are contacted by drilling fluids. These agents are characterized by particle size distribution which can sufficiently seal the subterranean pores. Examples of bridging agents include, but are not limited to, calcium carbonate, polymers, fibrous materials, hydrocarbon based materials, or combinations of these compounds.

In one embodiment of the present invention, an aqueous-based drilling fluid may comprise a bridging agent in an amount of from 0.5 to 15 percent by weight based on the total weight of the aqueous-based drilling fluid.

Another embodiment of the present invention, an aqueous-based drilling fluid may comprise a salt. The additiona of a salt may enhance the ability of the viscosifier to fully hydrate and provide greater viscosity. Examples of salts that may be used in the aqueous-based drilling fluid of the present inventin include, but re not limited to, potassium sulfate, ammonium sulfate, calcium chloride, potassium acetate, potassium chloride, por mixtures thereof.

If a salt is included in the aqueous-based drilling fluid of the present invention, it should be in an amount of greater than zero but equal to or less than 20 pecent by volumn.

In one embodiment of the present invention the aqueous-base drilling fluid comprises a surfactant which primarily serves to assist in dispersing clay and other solid particles in the fluid without creating environmental or disposal problems. Accordingly, surfactants used in the present aqueous-based drilling fluids are substantially any nontoxic, water-soluble agent suitable for use in aqueous-based drilling fluids that are compatible with the other components and act to disperse solids in the fluid. Suitable surfactants include, but are not limited to, alcohol ethoxylates, alcohol alkoxylates, alkylphenon ethoxylates, alkylphenon alkoxylated, alkylamine ethoxylates, alkylamine alkoxylates, alkylpolyglusides, alkylbenzene sulfonates, alkylether sulfates, alkylnaphthalene sulfonates, lignosulfonates, alphaolefin sulfonates, and the like.

In one embodiment of the present invention, an aqueous-based drilling fluid may comprise a surfactant in an amount of from 0.01 to 10 percent by weight based on the total weight of the aqueous-based drilling fluid.

The accretion additive and aquesous-based drilling fluid comprising said accretion additive are useful to inhibit tar accretion on metal surfaces. In one aspect the accretion additive and aquesous-based drilling fluids comprising said accretion additive can be used in a method for drilling a wellbore through an oil sand containing formation. In such a method, without the present accretion additive, tar and drill cuttings can adhere as accretions to the metal surfaces of the drilling assembly, and metal surfaces in the wellbore such as liners and casing. Thus, the present method includes circulating the aqueous-based drilling fluid, as described above, while operating a drilling assembly to drill the wellbore.

In another aspect of the present invention the accretion additive and aqueous-based drilling fluid comprising said accretions additive may be used to remove existing accretions on metal surfaces as by circulation through a wellbore or washing of the wellbore surface systems. The removal of accretions may require washing over a period of time to remove a desired amount of the accretins.

The aqueous-based drilling fluid may be reused repeatedly by simply removing drill cuttings it contains.

It will be appreciated that a drilling assembly can include, for example, a drill bit and possibly other cutting surfaces, a drill string, wellbore liners, casings, and various control and monitoring subs.

It will also be appreciated, that it may not be necessary to use the same drilling mud throughout an entire drilling operation. For example, a drilling mud selected to control accretion may not be required during drilling through the over burden. The method using the aqueous-based drilling fluid of the present invention is particularly useful during drilling wherein oil sand drill cuttings are being produced and very useful where there is more frequent contact between metal surfaces or metal surfaces and the wellbore wall such as, for example, during drilling of the build section and the horizontal section of a wellbore.

Where, during drilling using an aqueous-based drilling fluid according to the present invention, accretions are being deposited to an undesirable extent, the composition can be adjusted to, for example, increase one or more additional additive, to inhibit further undesirable amounts of accretion and possibly to remove, at least to some degree, those accretions already deposited.

### EXAMPLES

### Evaluation of accretion of additives to bitumen on metal surface

A description of the raw materials used in Examples 1 to 3 and Compartive Example A is as follows.

| | |
|---|---|
| A-AA-1 | is an anti-accretion additive comprising 22 weight percent C₈H₁₆O-(PO)₅ and 78 weight percent C₈H₁₆O-(PO)₅-(EO)₈; |
| A-AA-2 | is an anti-accretion additive comprising 13 weight percent C₈H₁₆O-(PO)₅ and 87 weight percent C₈H₁₆O-(PO)₅-(EO)₁₀ |
| Xanthan gum | available from Aldrich; |
| Bitumen | batch #5 product is obtained from Syncrude/Canmet; |
| Metal Coupon | is a zinc plated mending brace measuring 76mm x 15mm available from Lowe's manufactured by Stanley (S839-142/DPB118). |

Into 200 grams of 0.4 percent xantahn gum aqueous solution in a 500 ml round bottom flask, 30 grams of bitumen is added. The flask is capped with a glass stopper and then vigorously shaken by hands for 3 to 5 minutes to break the bitumen ball and make the bitumen dispersed in the solution. The anti-additives are added after the shaking. After the addition of additives, the flask is rotated on rotary evaporator at 120 rpm for 30 minutes to get the additives dissolved. The metal coupon is washed with acetone and water, dried in air at room temperature, and is carefully placed into the flask. The flask containing the metal coupon is fixed onto a rotary evaporator and rotated at 20 rpm at room temperature for 60 minutes. The flask is then removed from the rotary evaporator and the metal coupon is carefully taken out from the flask using a Teflon coated magnetic retriever. The metal coupon is placed in a 50 ml VRW hexagonal polystyrene weighing dish in a way that one end of the flat coupon touches a bottom side of the dish and the opposite up side edge of the dish supports the coupon plate near the other end. This made the coupon to rest in the dish in about 30 degree angle. The coupon in the weighing dish is allowed to steadily stay in a fume hood at ambient condition for 2 hours to drain off the loosely adhered solution and bitumen. A picture is taken for the coupon from the side that had more adhered bitumen. The percentage of bitumen-covered area is estimated. The compositins of Examples 1 to 3 and Comparaticve Example A are shown in Table 1

**Table 1**

| | Com Ex A | Ex 1 | Ex 2 | Ex 3 |
|---|---|---|---|---|
| A-AA-1, g | | 1 | | 0.5 |
| A-AA-2, g | | | 1 | |
| 0.4 % Xanthan gum aqueous solution, g | 200 | 200 | 200 | 200 |
| Bitumen, g | 30 | 30 | 30 | 30 |

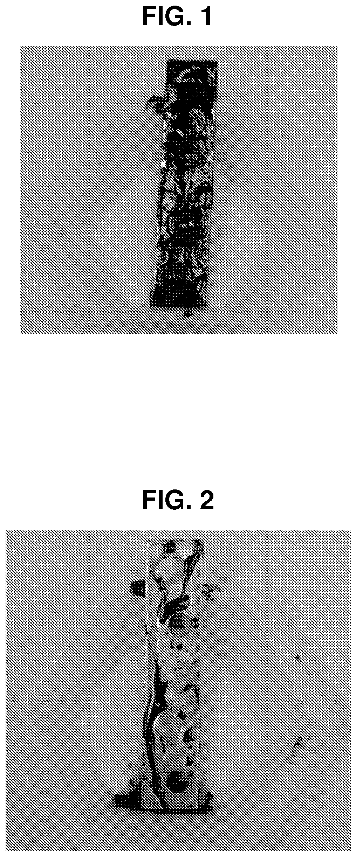

**FIG. 1** is a picture of Comparative Example A. As seen, the metal coupon surface is almost completely covered by a thick bitumen layer.

**FIG. 2** is a picture of Example 1. As seen, most of the metal coupon surface is free of bitumen residue.

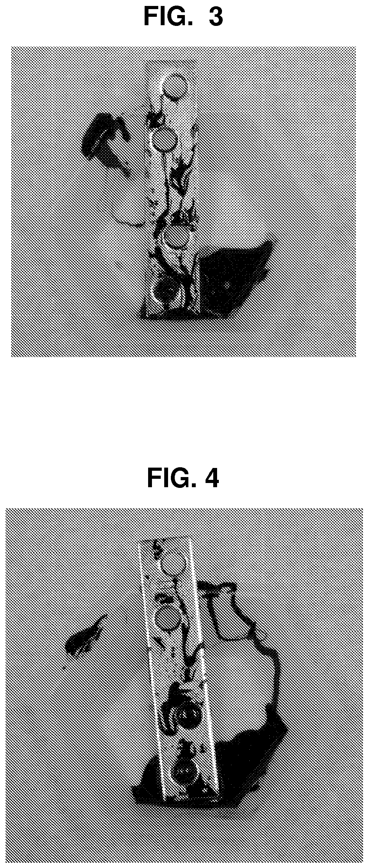

**FIG. 3** is a picture of Example 2. As seen, most of the metal coupon surface is free of bitumen residue.

**FIG. 4** is a picture of Example 3. As seen, most of the metal coupon surface is free of bitumen residue.

### Biodegradability

A-AA-1 and A-AA-2 are readily biodegradable (>60% in 28 days) according to OECD 301F.

### Aquatic Toxisity

The aquatic toxicity is 10-100 mg/l as measured according to OECD Guidelines 202, Daphnia sp. Acute Immobilization Test.

The Aquatic Toxicity and Biodegradation data compliant with CLEANGREDIENTS™ requirements

### Oil wash-out from tar sands by different anti-accretion agents

A description of the raw materials used in Example 4 and Compartive Examples B to D is as follows.

| | |
|---|---|
| Ethoxylated 2-propylheptnaol | is available as LUTENSOL ™ XP-70 from BASF; |
| Ethoxylated 2, 6, 8-trimethyl-4-nonanol | is available as TERGITOL™ TMN-6 from The Dow Chemical Company; |
| Ethoxylated C₁₂-C₁₄ secondary alcohols | is available as TERGITOL 15-S-7 from The Dow Chemical Company; and |
| Tar Sand | is obtained from an oilfield in Alberta, Canada. |

Into a 120 ml round wide-mouth glass bottle, 0.5 g of anti-accretion agent is weighed and then it is added with 99.5 g of water. A ¾ inch Teflon-coated stirring bar is put into the bottle and the solution was stirred for 2 hours to ensure the additive is completely dissolved. 5.0 grams of tar sand is added to the solution and the bottle is capped. All the samples are prepared in the same way and placed on the multi-position magnetic stirrer to stir at 500 rpm for 6 hours at room temperature. The stirrer is turned off and the samples are left undisturbed on the plate at room temperature for 2 days. Pictures are taken and the amount of oil on the surface edge is visually compared and subjectively ranked: 1 = no oil appeared on the surface edge; 2 = discontinuous oil dots on the surface edge; 3 = continuous oil dots on the surface edge; 4 = tick oil line on the surface edge; and 5 = broad oil band on the bottle wall at the surface edge.

A-AA-1, LUTENSOL XP-70 , TERGITOL TMN-6 , and TERGITOL 15-S-7 all have a cloud point between 30°C to 40°C in 1 weight percent de-ionized water solution.

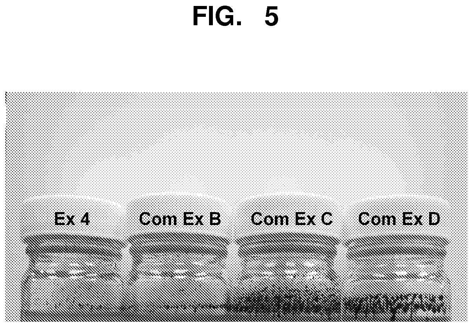

**FIG. 5** shows the amount of oil on the surface edge. As seen, Example 4 has the least amount of oil on the surface edge, followed by the sample with Comparative Example B. Significantly more oil is observed on the surface edge of the solution in the bottle for both Comparative Examples C and D. The results demonstrate that the anti-accretion agent of the present invention washes off less oil from tar sands compared to known surfactant based anti-accretion agents. This is useful to ease the removal of cuttings on the ground and minimize the damage to the wellborn.

**Table 2**

| | Ex 4 | Com Ex B | Com Ex C | Com Ex D |
|---|---|---|---|---|
| A-AA-1, g | 0.5 | | | |
| Ethoxylated 2-propylheptnaol, g | | 0.5 | | |
| Ethoxylated 2, 6, 8-trimethyl-4-nonanol, g | | | 0.5 | |
| Ethoxylated C₁₂-C₁₄ secondary alcohols, g | | | | 0.5 |
| De-ionized water, g | 99.5 | 99.5 | 99.5 | 99.5 |
| Tar Sand, g | 5 | 5 | 5 | 5 |
| Surface Oil Amount Ranking | 2 | 3 | 5 | 5 |

## Claims

1. An aqueous-based drilling fluid comprising an anti-accretion additive and optionally a viscosifier, the anti-accretion additive comprising:
i from 5 to 30 parts by weight of a propoxylated alcohol of the formula:
RO-(PO)x
wherein
R is a linear or branched alkyl having from 8 to 16 carbons,
and
x is from 1 to 10,
and
ii from 95 to 70 parts by weight of a propoxylated and ethoxylated alcohol of the formula:
R¹O-(PO)_{y}-(EO)_{z},
wherein
R¹ is a linear or branched alkyl having from 8 to 16 carbons,
y is from 2 to 10,
and
z is from 3 to 20,
wherein parts by weight is based on the combined weight of the propoxylated alcohol i and a propoxylated and ethoxylated alcohol ii and EO and PO denote ethylene oxide and propylene oxide units, respectively.

2. The aqueous-based drilling fluid of Claim 1 wherein R and R¹ are independently C₈-C₁₀ linear or branched alkyl.

3. The aqueous-based drilling fluid of Claim 1 wherein R and R¹ are independently 2-ethylhexyl or 2-propylheptyl and x and y are 5, and z is from 5 to 10.

4. The aqueous-based drilling fluid of Claim 1 further comprising one or more of a fluid loss additive, a lubricant, a foam control agent, a weighting material, a salt, or a surfactant.

5. A method for drilling a wellbore through a formation comprising the steps of:
a operating a drilling assembly to drill a wellbore;
and
b circulating an aqueous-based drilling fluid through the wellbore as it is drilled, the aqueous-based drilling fluid comprising an anti-accretion additive comprising:
i from 5 to 50 parts by weight of a propoxylated alcohol of the formula:
RO-(PO)x
wherein
R is a linear or branched alkyl having from 8 to 16 carbons,
and
x is from 1 to 10,
and
ii from 95 to 50 parts by weight of a propoxylated and ethoxylated alcohol of the formula:
R¹O-(PO)_{y}-(EO)_{z},
wherein
R¹ is a linear or branched alkyl having from 8 to 16 carbons,
y is from 2 to 10,
and
z is from 3 to 20,
wherein parts by weight is based on the combined weight of the propoxylated alcohol i and a propoxylated and ethoxylated alcohol ii and EO and PO denote ethylene oxide and propylene oxide units, respectively.

6. A method for limiting accretion on, or removing accretion from, metal surfaces in contact with tar-sand containing formation, the method comprising the step of washing the metal surfaces with an aqueous-based drilling fluid comprising an anti-accretion additive comprising:
i from 5 to 50 parts by weight of a propoxylated alcohol of the formula:
RO-(PO)x
wherein
R is a linear or branched alkyl having from 8 to 16 carbons,
and
x is from 1 to 10,
and
ii from 95 to 50 parts by weight of a propoxylated alcohol of the formula:
R¹O-(PO)_{y}-(EO)_{z},
wherein
R¹ is a linear or branched alkyl having from 8 to 16 carbons,
y is from 2 to 10,
and
z is from 3 to 20,
wherein parts by weight is based on the combined weight of the propoxylated alcohol i and a propoxylated and ethoxylated alcohol ii and EO and PO denote ethylene oxide and propylene oxide units, respectively.

## Patentansprüche

1. Eine Bohrflüssigkeit auf wässriger Basis, beinhaltend ein Antiansetzadditiv und optional ein Eindickmittel, wobei das Antiansetzadditiv Folgendes beinhaltet:
i zu 5 bis 30 Gewichtsteilen einen propoxylierten Alkohol der Formel:
RO-(PO)x,
wobei
R ein lineares oder verzweigtes Alkyl mit 8 bis16 Kohlenstoffen ist
und
x 1 bis 10 ist,
und
ii zu 95 bis 70 Gewichtsteilen einen propoxylierten und ethoxylierten Alkohol der Formel:
R¹O-(PO)_{y}-(EO)_{z},
wobei
R¹ ein lineares oder verzweigtes Alkyl mit 8 bis 16 Kohlenstoffen ist,
y 2 bis 10 ist
und
z 3 bis 20 ist,
wobei Gewichtsteile auf das kombinierte Gewicht des propoxylierten Alkohols i und eines propoxylierten und ethoxylierten Alkohols ii bezogen sind und EO und PO Ethylenoxid- bzw. Propylenoxideinheiten bezeichnen.

2. Bohrflüssigkeit auf wässriger Basis gemäß Anspruch 1, wobei R und R¹ unabhängig lineares oder verzweigtes C₈-C₁₀-Alkyl sind.

3. Bohrflüssigkeit auf wässriger Basis gemäß Anspruch 1, wobei R und R¹ unabhängig 2-Ethylhexyl oder 2-Propylheptyl sind und x und y 5 sind und z 5 bis 10 ist.

4. Bohrflüssigkeit auf wässriger Basis gemäß Anspruch 1, ferner beinhaltend eines oder mehrere eines Fluidverlustadditivs, eines Schmiermittels, eines Schaumregulierungsmittels, eines Beschwerungsmaterials, eines Salzes oder eines Tensids.

5. Ein Verfahren zum Bohren eines Bohrlochs durch eine Formation, das die folgenden Schritte beinhaltet:
a Betätigen einer Bohrgarnitur, um ein Bohrloch zu bohren;
und
b Zirkulieren einer Bohrflüssigkeit auf wässriger Basis durch das Bohrloch, während es gebohrt wird, wobei die Bohrflüssigkeit auf wässriger Basis ein Antiansetzadditiv beinhaltet, das Folgendes beinhaltet:
i zu 5 bis 50 Gewichtsteilen einen propoxylierten Alkohol der Formel:
RO-(PO)x,
wobei
R ein lineares oder verzweigtes Alkyl mit 8 bis 16 Kohlenstoffen ist
und
x 1 bis 10 ist,
und
ii zu 95 bis 50 Gewichtsteilen einen propoxylierten und ethoxylierten Alkohol der Formel:
R¹O-(PO)_{y}-(EO)_{z},
wobei
R¹ ein lineares oder verzweigtes Alkyl mit 8 bis16 Kohlenstoffen ist,
y 2 bis 10 ist
und
z 3 bis 20 ist,
wobei Gewichtsteile auf das kombinierte Gewicht des propoxylierten Alkohols i und eines propoxylierten und ethoxylierten Alkohols ii bezogen sind und EO und PO Ethylenoxid- bzw. Propylenoxideinheiten bezeichnen.

6. Ein Verfahren zum Beschränken von Ansetzen an oder zum Entfernen von Ansatz von Metalloberflächen, die mit einer Teersand enthaltenden Formation in Kontakt stehen, wobei das Verfahren den Schritt des Waschens der Metalloberflächen mit einer Bohrflüssigkeit auf wässriger Basis beinhaltet, die ein Antiansetzadditiv beinhaltet, das Folgendes beinhaltet:
i zu 5 bis 50 Gewichtsteilen einen propoxylierten Alkohol der Formel:
RO-(PO)x,
wobei
R ein lineares oder verzweigtes Alkyl mit 8 bis 16 Kohlenstoffen ist
und
x 1 bis 10 ist,
und
ii zu 95 bis 50 Gewichtsteilen einen propoxylierten Alkohol der Formel:
R¹O-(PO)_{y}-(EO)_{z},
wobei
R¹ ein lineares oder verzweigtes Alkyl mit 8 bis 16 Kohlenstoffen ist,
y 2 bis 10 ist
und
z 3 bis 20 ist,
wobei Gewichtsteile auf das kombinierte Gewicht des propoxylierten Alkohols i und eines propoxylierten und ethoxylierten Alkohols ii bezogen sind und EO und PO Ethylenoxid- bzw. Propylenoxideinheiten bezeichnen.

## Revendications

1. Un fluide de forage à base aqueuse comprenant un additif anti-accrétion et facultativement un agent d'amélioration de viscosité, l'additif anti-accrétion comprenant:
i de 5 à 30 parties en poids d'un alcool propoxylé de la formule :
RO-(PO)x
dans laquelle
R est un alkyle linéaire ou ramifié ayant de 8 à 16 carbones,
et
x vaut de 1 à 10,
et
ii de 95 à 70 parties en poids d'un alcool propoxylé et éthoxylé de la formule :
R¹O-(PO)_{y}-(EO)_{z},
dans laquelle
R¹ est un alkyle linéaire ou ramifié ayant de 8 à 16 carbones,
y vaut de 2 à 10,
et
z vaut de 3 à 20,
dans lequel les parties en poids sont rapportées au poids combiné de l'alcool propoxylé i et d'un alcool propoxylé et éthoxylé ii et EO et PO désignent respectivement des unités oxyde d'éthylène et oxyde de propylène.

2. Le fluide de forage à base aqueuse de la revendication 1 dans lequel R et R¹ sont indépendamment un alkyle linéaire ou ramifié en C₈-C₁₀.

3. Le fluide de forage à base aqueuse de la revendication 1 dans lequel R et R¹ sont indépendamment le 2-éthylhexyle ou le 2-propylheptyle et x et y valent 5, et z vaut de 5 à 10.

4. Le fluide de forage à base aqueuse de la revendication 1 comprenant en outre un ou plusieurs éléments parmi un réducteur de filtrat, un lubrifiant, un agent de régulation de mousse, un matériau alourdissant, un sel, ou un agent tensioactif.

5. Un procédé pour forer un puits de forage à travers une formation comprenant les étapes consistant à :
a actionner un ensemble de forage afin de forer un puits de forage ;
et
b faire circuler un fluide de forage à base aqueuse à travers le puits de forage à mesure qu'il est foré, le fluide de forage à base aqueuse comprenant un additif anti-accrétion comprenant :
i de 5 à 50 parties en poids d'un alcool propoxylé de la formule :
RO-(PO)x
dans laquelle
R est un alkyle linéaire ou ramifié ayant de 8 à 16 carbones,
et
x vaut de 1 à 10,
et
ii de 95 à 50 parties en poids d'un alcool propoxylé et éthoxylé de la formule :
R¹O-(PO)_{y}-(EO)_{z},
dans laquelle
R¹ est un alkyle linéaire ou ramifié ayant de 8 à 16 carbones,
y vaut de 2 à 10,
et
z vaut de 3 à 20,
dans lequel les parties en poids sont rapportées au poids combiné de l'alcool propoxylé i et d'un alcool propoxylé et éthoxylé ii et EO et PO désignent respectivement des unités oxyde d'éthylène et oxyde de propylène.

6. Un procédé pour limiter l'accrétion sur des surfaces métalliques en contact avec la formation contenant du sable bitumineux, ou pour retirer l'accrétion de ces surfaces, le procédé comprenant l'étape consistant à laver les surfaces métalliques avec un fluide de forage à base aqueuse comprenant un additif anti-accrétion comprenant :
i de 5 à 50 parties en poids d'un alcool propoxylé de la formule :
RO-(PO)x
dans laquelle
R est un alkyle linéaire ou ramifié ayant de 8 à 16 carbones,
et
x vaut de 1 à 10,
et
ii de 95 à 50 parties en poids d'un alcool propoxylé de la formule :
R¹O-(PO)_{y}-(EO)_{z},
dans laquelle
R¹ est un alkyle linéaire ou ramifié ayant de 8 à 16 carbones,
y vaut de 2 à 10,
et
z vaut de 3 à 20,
dans lequel les parties en poids sont rapportées au poids combiné de l'alcool propoxylé i et d'un alcool propoxylé et éthoxylé ii et EO et PO désignent respectivement des unités oxyde d'éthylène et oxyde de propylène.
